# EUROPÄISCHE PATENTSCHRIFT

(11) **EP 0 918 941 B1**
(45) Veröffentlichungstag und Bekanntmachung des Hinweises auf die Patenterteilung: **22.08.2001**
(21) Anmeldenummer: 97931658.5
(22) Anmeldetag: 25.06.1997
(51) Int. Cl.: F16B 11/00, F16B 12/44, F16B 7/18, B62D 29/00

(54) **VERFAHREN ZUR HERSTELLUNG EINES VERBINDUNGSKNOTENS**
METHOD OF CREATING A JOINT
PROCEDE DE REALISATION D'UN ASSEMBLAGE

(30) Priorität: 25.06.1996 DE 19625359
(43) Veröffentlichungstag der Anmeldung: 02.06.1999
(73) Patentinhaber: Sachsenring Automobiltechnik AG, 08058 Zwickau (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9701326
(87) Internationale Veröffentlichungsnummer: WO9749928

(56) Entgegenhaltungen:
- US-A- 3 716 259
- US-A- 4 299 508
- US-A- 4 988 230
- US-A- 5 435 110

## Beschreibung

Die vorliegende Erfindung bezieht sich auf ein Verfahren zur Herstellung eines Verbindungsknotens aus wenigstens zwei Einfach- oder Mehrfach-Hohlkammerprofilen gemäß dem Oberbegriff des Anspruchs 1.

Ein derartiges Herstellungsverfahren ist aus der US-A-3 716 259 bekannt. Dort wird ein vorgefertigtes Verbindungsknotenteil in Form eines Dreifach-Rohrverteilers oder in Form eines Rohrknies verwendet, das im Innenknick mit einer Füllöffnung versehen ist. Die Öffnungen zum Einstecken von anzuschließenden Rohren besitzen einen größeren Durchmesser als dem Außendurchmesser der Rohre entspricht und die Öffnungen besitzen an der Innenwand nach innen weisende Längsrippen, deren Rippenscheitel auf einem dem Außendurchmesser der anzuschließenden Rohre entsprechenden Kreis liegen. Auf die einzusteckenden Rohrenden wird je ein Schaumstoffring aufgeschoben, der beim Einstecken die durch die Längsrippen gebildeten Schlitze zwischen Rohrende und Verbindungsknotenteil abdichtet. Durch die Füllöffnung wird nach dem Zusammenstecken erhärtendes Material eingebracht. Nach dem Aushärten können die Schaumstoffringe abgenommen werden. Zur Einsparung von erhärtendem Einfüllmaterial kann der Innenraum des Verbindungsknotenteils mit einer Schaumstoffkugel oder dgl. ausgefüllt werden.

Aus dieser Vorveröffentlichung ist es auch bekannt, zur Herstellung von Verbindungsknoten für Ecken eines Kastens oder dgl. ein vorgefertigtes Innenteil mit drei zueinander senkrechten Armen zu verwenden, auf welche hohle Rahmenschienen aufgesteckt werden. Die Arme sind im Querschnitt etwas kleiner als das Hohlprofil der Schienen. In die hohlen Rahmenschienen werden abdichtende Schaumstoffteile eingebracht. Diese schließen unmittelbar an die Enden der Arme an. Sie verhindern das Weiterfließen des durch die Füllöffnung in die Schlitze zwischen Armen und Rahmenschienen eingebrachten aushärtenden Materials über die Enden der Arme hinaus.

Mit der vorliegenden Erfindung soll die Aufgabe gelöst werden, die Herstellung derartiger Verbindungsknoten zu vereinfachen und zu rationalisieren. Insbesondere soll ein Verbindungsknoten aus Einfach- oder Mehrfach-Hohlkammerprofilen unterschiedlicher Größe und Gestalt an einer beliebigen Stelle und möglichst auch ohne zusätzliche Dichtungsmittel herstellbar sein.

Gelöst wird diese Aufgabe durch die im Anspruch 1 angegebenen Verfahrensschritte.

Das erfindungsgemäße Verfahren zeichnet sich insbesondere dadurch aus, daß die Verbindung der unterschiedlichen, beliebig anzuordnenden Hohlkammerprofile durch einen einzigen Gieß-, Spritzgießprozeß oder dgl. erfolgt. Das Material fließt dabei zumindest im Bereich des Verbindungsknotens in alle zusammenstoßenden Hohlkammerprofile und erhärtet entsprechend dem angewendeten Verfahren und der Größe der Hohlkammerprofile zu einem Knoten mit kürzeren oder längeren Verzweigungsarmen.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: eine Anzahl von Hohlkammerprofilen, die zu einem Verbindungsknoten zusammengesetzt werden sollen,
- Fig. 2: den aus den in Fig. 1 dargestellten Hohlkammerprofilen zusammengesetzten Verbindungsknoten,
- Fig. 3: drei Hohlkammerprofile für einen Verbindungsknoten in einer Explosionsdarstellung,
- Fig. 4: den aus den drei Hohlkammerprofilen der Fig.3 zusammengesetzten Verbindungsknoten,
- Fig. 5: einen bei der Herstellung des Verbindungsknotens gemäß Fig. 4 entstehenden Knotenkern,
- Fig. 5A: einen vergrößerten Abschnitt des Verbindungsknotens der Fig. 5 und
- Fig. 6: eine Ausführungsmöglichkeit des Knotenkerns als Hohlkörper.

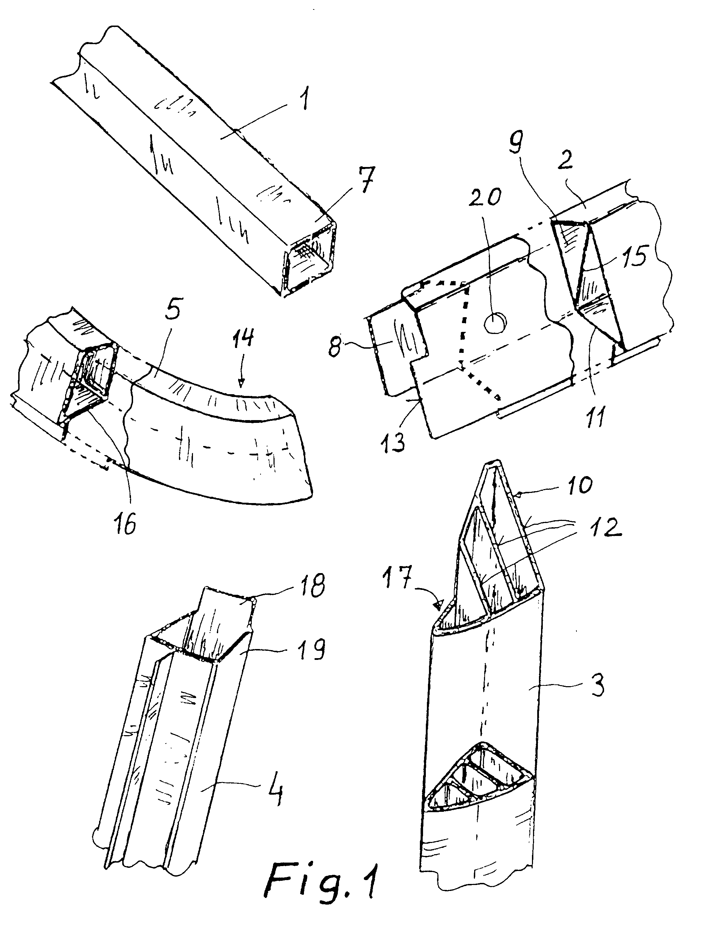

In der Fig. 1 sind Hohlkammerprofile 1 bis 5 dargestellt, die zu dem in Fig. 2 dargestellten Verbindungsknoten 6 zusammengesetzt werden. Das Hohlkammerprofil 1 ist im Querschnitt rechteckig und durchstößt beispielsweise mit seinem Endteil 7 die hintere Seitenwand 8 des Hohlkammerprofils 2 und ragt somit in den Kammerraum 9.

Die abgeschrägte Spitze 10 des im Querschnitt dreieckigen Mehrfach-Hohlkammerprofils 3 ragt durch die geöffnete Unterseite 11 des ebenfalls aus mehreren Kammern bestehenden Hohlkammerprofils 2 und liegt mit der abgeschrägten Seite 12 von innen her an der Vorderwand 13 des Hohlkammerprofils 2 an.

Der bogenförmig verlaufende Abschnitt 14 des rechteckigen Hohlkammerprofils 5 ragt zwischen der hinteren Seitenwand 8 und der Vorderwand 13 des Hohlkammerprofils 2 in dessen Hohlraum. Zu diesem Zweck ist die Zwischenwand 15 desselben entfernt. Dabei kommt ein Abschnitt der Unterseite 16 des Hohlkammerprofils 5 auf dem Eckabschnitt 17 des Hohlkammerprofils 3 zu liegen.

Die Seiten- , Vorder- und Zwischenwände 8, 13, 15 sowie die Unterseiten 11, 16 bilden Profilwände, wie im Anspruch 1 definiert.

Schließlich ist der eine Zunge 18 aufweisende Endteil 19 des Hohlkammerprofils 4 an die Unterseite 16 des Hohlkammerprofils 5 angelegt, wobei die Zunge 18 in einen nicht dargestellten Schlitz der Unterseite 16 eingreift.

Die Wände oder Zwischenwände der einzelnen Hohlkammerprofile 1 bis 5 sind derart mit zeichnerisch nicht dargestellten Öffnungen oder Ausschnitten versehen, daß im Bereich des Stoßes sämtlicher Hohlkammerprofile sämtliche Hohlräume miteinander verbunden sind.

In dieser in Fig. 2 dargestellten Zusammenbau-Lage werden die Hohlkammerprofile 1 bis 5 durch geeignete Haltemittel, beispielsweise mittels Klammern, zusammengehalten. In wenigstens einer Wand, beispielsweise in der Vorderwand 13 des Hohlkammerprofils 3, ist eine Füllöffnung 20 angebracht. Durch diese Füllöffnung 20 hindurch kann mittels einer Fülldüse oder dgl. ein aushärtbares Material in den Hohlraum des den Verbindungsknoten 6 bildenden Abschnitts 21 eingebracht werden, das anschließend aushärtet oder erstarrt und einen festen Knotenkern bildet, der im Knotenbereich an den Innenwänden der Hohlkammerprofile 1 bis 5 fest anliegt und/oder dort fest haftet.

Das Material kann eingepreßt oder mit bzw. ohne Druck eingegossen oder eingespritzt werden. Als Material finden Thermo- oder Duroplaste oder auch Metall, insbesondere Aluminium, Verwendung. Diese Materialien können kompakt oder in geschäumter Form vorliegen, wobei zum Ausschäumen die üblichen Ausschäumverfahren angewendet werden können. Bei Verwendung von Kunststoffen sind diese zweckmäßig durch geeignete Mittel hochverstärkt. Hierzu werden vorzugsweise Fasern aus Polyamid, Aramid, Kohlenstoff, Glas oder dgl. verwendet. Bei der Herstellung des Knotenkerns aus Phenolharzpreßmasse kann bzw. können auch, eventuell auch zusätzlich, Holzmehl oder Holzfasern verwendet oder es können auch mineralische Füllstoffe zugesetzt werden.

Günstig ist es, wenn an den Stoßstellen der einzelnen Wände oder Profilkanten ein dünner Luftspalt vorhanden ist. Hierdurch kann beim Ausfüllen des Verbindungsknotens 6 innen vorhandene Luft leichter entweichen.

Als Material für die Hohlkammerprofile eignet sich jedes ausreichend feste Material. Bei der Herstellung des Knotenkerns aus einem Material, das zum Einbringen thermisch plastifiziert oder verflüssigt werden muß, muß der Werkstoff der Hohlkammerprofile 1 bis 5 genügend stabil bleiben. Als Werkstoffe können daher je nach Wahl des einzubringenden Materials Pappe, Holz, Kunststoff, Metall oder dgl. angewendet werden. Die Hohlkammerprofile 1 bis 5 dienen bei der Herstellung des Knotenkerns praktisch als Formwerkzeug.

Das in den Fig. 1 und 2 dargestellte Ausführungsbeispiel läßt sich beliebig abändern. Es können mehr oder weniger als fünf Hohlkammerprofile vorgesehen sein.

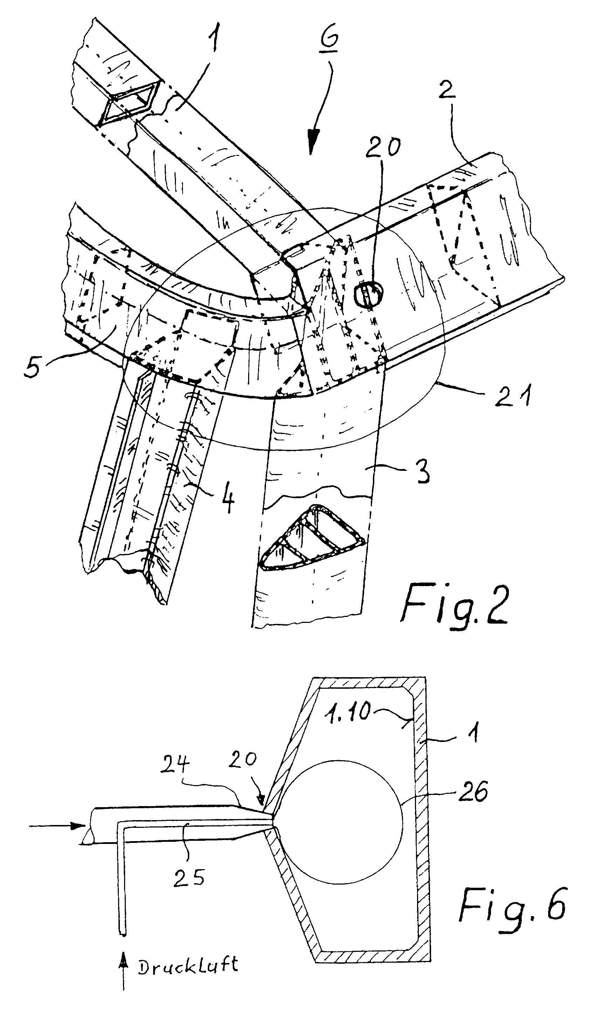

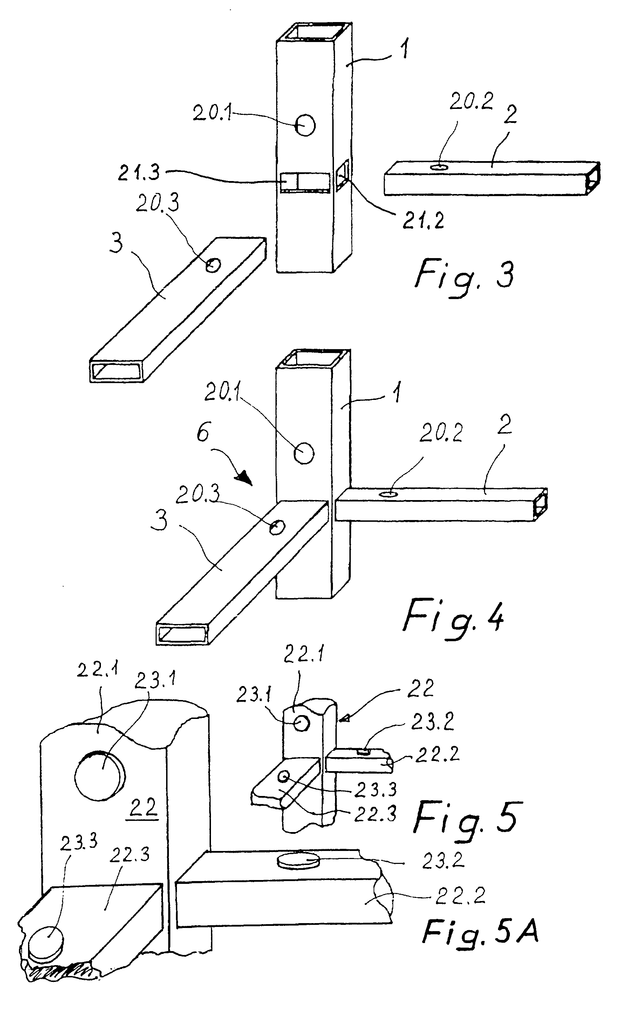

Eine vereinfachte Knotenausführung ist beispielsweise in den Fig. 3 und 4 dargestellt. Ein hierbei entstehender Knotenkern ist in den Fig. 5 und 5A dargestellt.

Bei dieser vereinfachten Knotenausführung sind drei, im Querschnitt rechteckige, Hohlkammerprofile 1, 2 und 3 vorgesehen. Im Hohlkammerprofil 1 sind zwei Schlitze, nämlich ein Schlitz 21.2 zum Anfügen des Hohlkammerprofils 2 und ein Schlitz 21.3 zum Anfügen des Hohlkammerprofils 3 angebracht. Außerdem besitzt hier jedes Hohlkammerprofil 1, 2 und 3 je eine Füllöffnung 20.1 bzw. 20.2 bzw. 20.3 zum Einfüllen bzw. Einspritzen des Kernmaterials. Die Füllöffnungen 20.1, 20.2, 20.3 befinden sich im engeren Bereich des Verbindungsknotens 6, wie anhand der Fig. 4 ersichtlich ist, die den zusammengesetzten Verbindungsknoten 6 zeigt.

Die Fig. 5 zeigt den bei dem gebildeten Verbindungsknoten 6 entstehenden Knotenkern 22. Dieser besitzt einen im Hohlkammerprofil 1 verlaufenden Kernarm 22.1, einen im Hohlkammerprofil 2 verlaufenden Kernarm 22.2 und einen im Hohlkammerprofil 3 verlaufenden Kernarm 22.3. Entsprechend den Füllöffnungen 20.1, 20.2 und 20.3 in den zugehörigen Hohlkammerprofilen 1, 2 und 3 besitzt der Knotenkern 22 Angußzapfen 23.1 bzw. 23.2 bzw. 23.3, wie anhand der Fig. 5A, einer vergrößerten Ansicht eines Abschnittes des Knotenkerns 22 der Fig. 5, ersichtlich ist.

Gemäß einer weiteren vorteilhaften Ausgestaltung der Erfindung kann der Knotenkern als Hohlkörper ausgebildet werden. Hierzu wird beispielsweise gemäß Fig. 6 in die Füllöffnung 20 eines beispielsweise fünfeckigen Hohlkammerprofils 1 mit der Angußdüse 24 beim Einspritzen des Kernmaterials gleichzeitig Druckluft oder ein anderes Gas über einen Zusatzkanal 25 eingeblasen. Dadurch bildet sich im Hohlkammerprofil 1 eine Blase 26 aus dem Kernmaterial, die derart weit aufgeblasen wird, daß sie sich an die Innenwandung 1.10 des Hohlkammerprofils 1 anlegt. Je nach der Temperatur, die die Blase 26 im Augenblick des Anliegens an der Innenwandung 1.10 noch besitzt, kann sich diese mit der Innenwandung 1.10 stoffschlüssig verbinden, beispielsweise dort haften oder anschmelzen. Wird ein Kunststoff als Kernmaterial verwendet, so kann ein kleberhaltiges Material verwendet werden, das eine stoffschlüssige Verbindung desselben mit dem Hohlkammerprofil 1 gewährleistet. Beispielsweise kann ein kleberhaltiges Material auf der Basis eines Ein- oder Zweikomponenten-Klebers, beispielsweise auf der Basis von Polylactam oder Polyurethan, verwendet werden. Gegebenenfalls kann es zweckmäßig sein, das erhärtende bzw. erstarrende Kernmaterial, insbesondere aus Metall oder metallhaltigem Material, auf mindestens etwa 500°C aufzuheizen, so daß zwischen dem Material und dem der Hohlkammerprofile eine Adhäsionsverbindung bewirkt wird.

Die Gestaltung der Hohlkammerprofile kann beliebig sein. Deren Anordnung ist nur so zu gestalten, daß im Verbindungsknoten 6 oder in dessen Bereich die entsprechenden Hohlkammerprofile zusammenlaufen und entsprechend miteinander verbindbar und ausreichend abdichtbar sind.

## Patentansprüche

1. Verfahren zur Herstellung eines Verbindungsknotens (6) aus wenigstens zwei Einfach- oder Mehrfach-Hohlkammerprofilen (1, 2, 3, 4, 5) durch Zusammenfügen dieser Hohlkammerprofile (1, 2, 3, 4, 5) derart, daß eine Öffnung des einen Hohlkammerprofils (1 bzw. 2 bzw. 3 bzw.4 bzw. 5) mit einer Öffnung eines anderen Hohlkammerprofils (1 bzw. 2 bzw. 3 bzw. 4 bzw. 5) korrespondiert, daß wenigstens eines der Hohlkammerprofile (1, 2, 3, 4, 5) im Bereich (21) des gebildeten Verbindungsknotens (6) mit einer Füllöffnung (20) versehen wird, durch die hindurch ein erhärtendes Material eingebracht wird, das den Verbindungsknoten (6) ausfüllt, dadurch gekennzeichnet, daß in wenigstens einer Profilwand (8, 11, 13, 15, 16) eines der Hohlkammerprofile (1, 2, 3, 4, 5) im Bereich (21) eines herzustellenden Verbindungsknotens (6) eine Öffnung vorgesehen wird, in die oder an die wenigstens ein anderes Hohlkammerprofil (1, 2, 3, 4, 5) mit seiner Profilöffnung hineinragt oder anstößt oder mit einer in seiner Prorilwand angebrachten Öffnung anliegt bzw. hineinragt, daß die zu dem Verbindungsknoten (6) zusammengefügten Hohlkammerprofile (1, 2, 3, 4, 5) mittels Haltemitteln in ihrer Lage fixiert werden, daß vor oder nach dem Zusammenfügen der Hohlkammerprofile (1, 2, 3, 4, 5) wenigstes in einem derselben im Bereich (21) des Verbindungsknotens (6) eine Füllöffnung (20) vorgesehen wird, durch die das erhärtende Material derart eingebracht wird, daß es die Hohlkammerprofile (1, 2, 3, 4, 5) wenigstens im Bereich (21) des Verbindungsknotens (6) ausfüllt und dann erhärtet, und daß anschließend die Haltemittel entfernt werden.

2. Verfahren nach Anspruch 1, dadurch gekennzeichnet, daß das einzubringende Material - insbesondere mit Überdruck - durch Vergießen, Ausspritzen, Einpressen, Ausschäumen oder dgl. eingebracht wird.

3. Verfahren nach Anspruch 1 oder 2, dadurch gekennzeichnet, daß als eingebrachtes Material ein hochverstärkter Thermoplast verwendet wird.

4. Verfahren nach Anspruch 3, dadurch gekennzeichnet, daß ein Thermoplast verwendet wird, der wenigstens eines der Verstärkungsmittel Polyamid, Aramid, Kohlenstoff oder Glas in Form von Fasern und/oder mineralische Füllstoffe enthält.

5. Verfahren nach Anspruch 1 oder 2, dadurch gekennzeichnet, daß als eingebrachtes Material ein hochverstärkter Duroplast verwendet wird.

6. Verfahren nach Anspruch 5, dadurch gekennzeichnet, daß ein Duroplast verwendet wird, der wenigstens eines der Verstärkungsmaterialien Polyamid, Aramid, Kohlenstoff oder Glas in Form von Fasern und/oder Holzmehl oder Holzfasern und/oder mineralische Füllstoffe enthält.

7. Verfahren nach Anspruch 5 oder 6, dadurch gekennzeichnet, daß als eingebrachtes duroplastisches Material Phenolharzpreßmasse verwendet wird.

8. Verfahren nach einem der Ansprüche 3 bis 7, dadurch gekennzeichnet, daß der verwendete Thermo- oder Duroplast in den Hohlkammerprofilen (1, 2, 3, 4, 5) ausgeschäumt wird.

9. Verfahren nach Anspruch 1 oder 2, dadurch gekennzeichnet, daß als eingebrachtes Material Aluminium-Druckguß verwendet wird.

10. Verfahren nach Anspruch 9, dadurch gekennzeichnet, daß Aluminium-Druckguß in geschäumter Form verwendet wird.

11. Verfahren nach einem der Ansprüche 1 bis 10, dadurch gekennzeichnet, daß an den Stoßstellen der Hohlkammern zumindest ein Luftspalt vorgesehen wird.

12. Verfahren nach Anspruch 1 oder 2, dadurch gekennzeichnet, daß das erhärtende Material über eine Düse (24) mit Druckgas derart beaufschlagt wird, daß sich ein Hohlkörper (26) bildet, der sich an den Hohlkammerprofilen (1, 2, 3, 4, 5) großflächig anlegt und gegebenenfalls mit diesen stoffschlüssig verbindet.

13. Verfahren nach Anspruch 12, dadurch gekennzeichnet, daß als erhärtendes Material ein kleberhaltiges Material eingebracht wird, das sich mit den Hohlkammerprofilen (1, 2, 3, 4, 5) stoffschlüssig verbindet.

14. Verfahren nach Anspruch 13, dadurch gekennzeichnet, daß das kleberhaltige Material ein Ein- oder Zweikomponenten-Kleber auf der Basis von Polylactam oder Polyurethan verwendet wird.

15. Verfahren nach Anspruch 12, dadurch gekennzeichnet, daß das erhärtende bzw. erstarrende Material aus Metall oder metallhaltigem Material auf mindestens 500°C aufgeheizt wird, so daß an den Hohlkammerprofilen (1, 2, 3, 4, 5) eine Adhäsionsverbindung bewirkt wird.

## Claims

1. Method for producing a connecting node (6) from at least two single or multiple hollow-chamber profiles (1, 2, 3, 4, 5) by assembling these hollow-chamber profiles (1, 2, 3, 4, 5) together such that an opening of one hollow-chamber profile (1 or 2 or 3 or 4 or 5) corresponds with an opening of another hollow-chamber profile (1 or 2 or 3 or 4 or 5), such that at least one of the hollow-chamber profiles (1, 2, 3, 4, 5) is provided with a filling opening (20) which is located in the area (21) of the formed connecting node (6) and through which is introduced a hardening material which fills the connecting node (6), characterised in that an opening is provided in at least one profile wall (8, 11, 13, 15, 16) of one of the hollow-chamber profiles (1, 2, 3, 4, 5) in the area (21) of a connecting node (6) to be produced, into or against which opening at least one other hollow-chamber profile (1, 2, 3, 4, 5) projects or butts with its profile opening or bears or projects with an opening provided in its profile wall, in that the hollow-chamber profiles (1, 2, 3, 4, 5) assembled to form the connecting node (6) are fixed in their position by holding means, in that before or after the assembly of the hollow-chamber profiles (1, 2, 3, 4, 5) at least one of these is provided with a filling opening (20) which is located in the area (21) of the connecting node (6) and through which the material to be hardened is introduced such that it fills the hollow-chamber profiles (1, 2, 3, 4, 5) at least in the area (21) of the connecting node (6) and then hardens, and in that then the holding means are removed.

2. Method according to claim 1, characterised in that the material to be introduced - in particular at a positive pressure - is introduced by pouring, spraying, injection, foaming or the like.

3. Method according to claim 1 or 2, characterised in that a highly reinforced thermoplastic is used as the material introduced.

4. Method according to claim 3, characterised in that a thermoplastic is used which contains at least one of the reinforcing means polyamide, aramide, carbon or glass in the form of fibres and/or mineral fillers.

5. Method according to claim 1 or 2, characterised in that a highly reinforced duroplastic is used as the material introduced.

6. Method according to claim 5, characterised in that a duroplastic is used which contains at least one of the reinforcing materials polyamide, aramide, carbon or glass in the form of fibres and/or wood dust or wood fibres and/or mineral fillers.

7. Method according to claim 5 or 6, characterised in that phenolic resin moulding compound is used as the duroplastic material introduced.

8. Method according to one of claims 3 to 7, characterised in that the thermoplastic or duroplastic used is foamed in the hollow-chamber profiles (1, 2, 3, 4, 5).

9. Method according to claim 1 or 2, characterised in that die-cast aluminium is used as the material introduced.

10. Method according to claim 9, characterised in that die-cast aluminium is used in foamed form.

11. Method according to one of claims 1 to 10, characterised in that at least one air gap is provided at the joint locations of the hollow chambers.

12. Method according to claim 1 or 2, characterised in that the hardening material is exposed to pressurised gas through a nozzle (24) such that a hollow body (26) is formed which adjoins the hollow-chamber profiles (1, 2, 3, 4, 5) over a large area and possibly forms an intimate material connection with these.

13. Method according to claim 12, characterised in that a material containing adhesive is introduced as the hardening material which forms an intimate material connection with the hollow-chamber profiles (1, 2, 3, 4, 5).

14. Method according to claim 13, characterised in that a single-component or two-component adhesive based on polylactam or polyurethane is used as the material containing adhesive.

15. Method according to claim 12, characterised in that the hardening or solidifying material consisting of metal or a material containing metal is heated to at least 500°C so that an adhesive connection is formed at the hollow-chamber profiles (1, 2, 3, 4, 5).

## Revendications

1. Procédé de réalisation d'un assemblage (6) à partir d'au moins deux profilés (1, 2, 3, 4, 5) comportant une ou plusieurs chambres creuses, par jonction de ces profilés (1, 2, 3, 4, 5) de manière qu'une ouverture d'un profilé (1 ou 2 ou 3 ou 4 ou 5) correspond à une ouverture d'un autre profilé (1 ou 2 ou 3 ou 4 ou 5), au moins un des profilés (1, 2, 3, 4, 5) présentant dans la zone de l'assemblage (6) une ouverture de remplissage (20) dans laquelle peut être introduit un matériau durcissable remplissant l'assemblage (6),
caractérisé en ce que
- dans au moins une paroi (8, 11, 13, 15, 16) d'un des profilés creux (1, 2, 3, 4, 5) il est prévu, dans la zone (21) de l'assemblage (6) à réaliser, une ouverture dans laquelle pénètre ou le long de laquelle s'aboute un autre profilé creux (1, 2, 3, 4, 5), par l'ouverture de son profilé ou par une ouverture prévue dans une paroi de ce profilé,
- les profilés (1, 2, 3, 4, 5), joints de manière à former l'assemblage (6), sont fixés dans cette position par des moyens de maintien,
- avant ou après la jonction des profilés (1, 2, 3, 4, 5) il est pratiqué dans au moins un de ceux-ci, dans la zone (21) de l'assemblage (6), une ouverture de remplissage (20) à travers laquelle est introduit le matériau durcissable de manière que celui-ci remplisse les profilés (1, 2, 3, 4, 5) au moins dans la zone (21) et y durcisse, les moyens de maintien étant ensuite retirés.

2. Procédé selon la revendication 1,
caractérisé en ce que
le matériau à introduire, notamment avec pression est introduit par coulée, injection, poussée à force, génération de mousse ou similaire.

3. Procédé selon l'une quelconque des revendications 1 ou 2,
caractérisé en ce que
le matériau introduit est un thermoplaste fortement armé.

4. Procédé selon la revendication 3,
caractérisé en ce qu'
on utilise un thermoplaste contenant au moins un des moyens de renforcement que sont le polyamide, l'aramide, le carbone ou le verre sous forme de fibres, et/ou de matériaux minéraux de remplissage.

5. Procédé selon l'une quelconque des revendications 1 ou 2,
caractérisé en ce que
le matériau introduit est une matière thermodurcissable fortement armée.

6. Procédé selon la revendication 5,
caractérisé en ce qu'
on utilise une matière thermodurcissable contenant au moins un des moyens de renforcement que sont le polyamide, l'aramide, le carbone ou le verre sous la forme de fibres, et/ou de la sciure de bois ou de fibres de bois et/ou des matériaux minéraux de remplissage.

7. Procédé selon l'une quelconque des revendications 5 ou 6,
caractérisé en ce que
le matériau thermodurcissable utilisé est une masse de résine phénolique.

8. Procédé selon l'une quelconque des revendications 3 à 7,
caractérisé en ce que
la matière thermoplastique ou thermodurcissable est produite à l'état de mousse dans les profilés creux (1, 2, 3, 4, 5).

9. Procédé selon l'une quelconque des revendications 1 ou 2,
caractérisé en ce que
le matériau introduit est de l'aluminium coulé sous pression.

10. Procédé selon la revendication 9,
caractérisé en ce que
l'aluminium coulé sous pression est utilisé sous forme spongieuse.

11. Procédé selon l'une quelconque des revendications 1 à 10,
caractérisé en ce qu'
il est prévu au moins une fente d'air le long des zones d'aboutement des chambres creuses.

12. Procédé selon l'une quelconque des revendications 1 ou 2,
caractérisé en ce que
le matériau durcissable est, par l'intermédiaire d'une buse (24) soumis à l'action d'un gaz sous pression de manière à former un corps creux (26) qui s'applique largement à plat sur les profilés (1, 2, 3, 4, 5) en établissant éventuellement avec ceux-ci une liaison par les matières.

13. Procédé selon la revendication 12,
caractérisé en ce que
comme matériau durcissable, on utilise un matériau contenant de l'adhésif qui se lie, au niveau des matières, avec les profilés creux (1, 2, 3, 4, 5).

14. Procédé selon la revendication 13,
caractérisé en ce que
le matériau contenant de l'adhésif est une colle à un ou deux composants, à base de polylactame ou de polyuréthane.

15. Procédé selon la revendication 12,
caractérisé en ce que
le matériau durcissable ou solidifiable, fait d'un métal ou contenant du métal, est chauffé à 500°C au moins, de sorte qu'il se crée une liaison adhésive sur les profilés creux (1, 2, 3, 4, 5).
